# EUROPÄISCHE PATENTSCHRIFT

(11) **EP 0 491 002 B1**
(45) Veröffentlichungstag und Bekanntmachung des Hinweises auf die Patenterteilung: **23.02.1994**
(21) Anmeldenummer: 90914722.5
(22) Anmeldetag: 04.09.1990
(51) Int. Cl.: G01L 5/24, G01L 1/12

(54) **Verfahren und Vorrichtung zur zerstörungsfreien Ermittlung des Vorspannungszustandes ferromagnetischer Verbindungselemente**
Process and device for non-destructive determination of the prestressing condition of ferromagnetic securing elements
Procédé et dispositif pour la détermination non destructive de l'état de précontrainte d'éléments de fixation ferromagnetiques

(30) Priorität: 05.09.1989 CH 3221/89
(43) Veröffentlichungstag der Anmeldung: 24.06.1992
(73) Patentinhaber: STENGEL, Wolfgang, Dr., D-80809 München (DE)
(72) Erfinder: STENGEL, Wolfgang, Dr., D-80809 München (DE)
(74) Vertreter: Strasse, Joachim, Dipl.-Ing.
(86) Internationale Anmeldenummer: EP9001482
(87) Internationale Veröffentlichungsnummer: WO9103717

(56) Entgegenhaltungen:
- EP-A- 0 167 692
- DE-A- 3 404 232
- Patent Abstracts of Japan, vol. 7, no. 121 (P-199)) (1266) 25 May 1983, & JP-A-5839920
- Patent Abstracts of Japan, vol. 6, no. 59 (P-110) (937), 16 April 1982 & JP-A-571942

## Beschreibung

Die Erfindung betrifft ein Verfahren zur zerstörungsfreien Ermittlung des Spannungszustandes ferromagnetischer Verbindungselemente durch Anlegen eines magnetischen Wechselfeldes und Erfassen und Auswerten der magnetomechanischen akustischen Emission.

Die Ermittlung des Spannungszustandes, der sich in einem Verbindungselement am Einsatzort einstellt, stellt ein aktuelles Problem von großer Bedeutung dar. Die Bedeutung liegt vor allem auf dem Gebiet der Sicherheit. Es darf aber auch der wirtschaftliche Aspekt des Problems nicht unterschätzt werden. So kann in diesem Zusammenhang darauf hingewiesen werden, daß weltweit die Produkthaftung eine immer größere Rolle spielt.

Von besonderer Bedeutung ist die Ermittlung der in Schraubverbindungen vorliegenden Spannungsverhältnisse. Wenn Teile miteinander lösbar verbunden werden müssen, geschieht dies in der Regel mit Schraubverbindungen. So sind beispielsweise in einem Automobil etwa zwei- bis dreitausend Schraubverbindungen vorhanden. Von diesen sind rund dreihundert kritisch für die Sicherheit. Diese Schrauben müssen daher besonders sorgfältig angezogen werden, weder zu lose noch zu stark (Industrieanzeiger 13/1988, Seiten 24 bis 27).

Beim Anziehen einer Schraube kommt es letztlich auf die erzielte Spannkraft an. Einzig die Spannkraft entscheidet darüber, wie fest die lösbar miteinander zu verbindenden Teile verklemmt werden. Zur Kontrolle dieser Spannkraft stehen derzeit dem Praktiker keine direkten Meßmethoden zur Verfügung, sondern lediglich Indizien oder Hilfsgrößen, nämlich das Drehmoment und der Drehwinkel oder die Kombination der beiden. Als Hilfsgröße kann im gewissen Sinne noch die Streckgrenze in Betracht gezogen werden.

Beim drehmoment-gesteuerten Anziehen einer Schraube ist zu berücksichtigen, daß sechzig bis neunzig Prozent des Drehmoments als Reibung unter dem Schraubenkopf und im Gewinde benötigt werden. Allein die verbleibenden zehn bis vierzig Prozent des Drehmoments bewirken eine Dehnung der Schraube. Lediglich aus dieser Dehnung der Schraube resultiert die erwünschte Spannkraft. Bei unterschiedlichen Reibungsverhältnissen kann die Spannkraft bei konstantem Anziehmoment im Extremfall bis zu hundert Prozent variieren. Als Kontrolle der Spannkraft einer Schraubverbindung bleibt somit die Erfassung des Drehmoments eine bloße meßtechnische Krücke. Abweichungen von der geforderten Spannkraft bei Schraubverbindung können durch ein Anziehverfahren vermindert werden, das durch das Drehmoment und den Drehwinkel gesteuert wird. Bei diesem Verfahren ist jedoch der Aufwand für die Steuer- und Meßelektronik wesentlich höher als beim drehmoment-gesteuerten Anziehen. Beim Anziehverfahren, das durch Drehmoment/Drehwinkel gesteuert wird, wird die Schraube bis zum Auftreten eines Fügemoments eingedreht und von da weg um einen vorgegebenen Winkel angezogen. Weil aus dem Drehwinkel und der Gewindesteigung die Dehnung der Schraube ermittelt werden kann, läßt sich unter Berücksichtigung des Elastizitätsmoduls des Schraubenwerkstoffes die Spannkraft der Schraube errechnen. Unabhängig von den Reibungsverhältnissen führt dieses streckgrenzgesteuerte Anziehverfahren zu den besten indirekten Aussagen über die Vorspannkraft einer Schraubverbindung.

Grundsätzlich wäre es zur Ermittlung der Vorspannkraft ideal, wenn eine direkte Messung der Parameter Kraft und Dehnung während des Anziehens der Schraube vorgenommen werden könnte. In der Fabrikation ließen sich jedoch bisher bei der Anwendung der herkömmlichen Anziehverfahren diese Parameter nicht messen (Industrieanzeiger 16/1988, Seiten 21 bis 24).

Aus der DE-AS 25 19 430 ist bereits ein Meßverfahren zur Bestimmung der Axialkraft von Schraubenbolzen bekannt, bei dem die Schraubenbolzen mit Hilfe von Transversal- und Longitudinalwellen zu Ultraschallresonzanzschwingungen angeregt werden. Die Eigenfrequenzen sind daher abhängig von dem Longitudinalmodul bzw. Transversalmodul der Schraubenbolzen. Die zu messenden Axialkräfte werden aus den Frequenzverschiebungen der Eigenfrequenzen in Folge der Dehnung des Probenkörpers abgeleitet.

Ferner ist aus der DE-33 33 285 A1 eine Einrichtung zum Erfassen von Kräften, Spannungen bzw. Beschleunigungen an Maschinen, Geräten oder dgl. bekannt, bei der ein Meßwertgeber in ein kraftbeaufschlagtes Bauteil eingebaut wird. Der Meßwertgeber enthält ein niederohmiges Widerstands-Bauelement. Bei Schraubverbindungen erfolgt der Einbau des Meßwertgebers in die Schraube bzw. Unterlegscheibe.

Ferner ist aus der DE-33 45 760 C2 eine Meßvorrichtung mit einer Meßfeder aus ferromagnetischem Material bekannt, bei der das Verformungsverhalten einer Biegefeder aus ferromagnetischem Material durch einen Dehnungsmeßstreifen und ein am Ort des Dehnungsmeßstreifens die Feder durchsetzendes Magnetfeld untersucht wird.

Aus der DE-2714 334 A1 ist eine Vorrichtung zum Überwachen der Spannkraft einer Schraubverbindung bekannt, bei der auf den Umfang der Mutter einer Schraubverbindung zur Messung der spannungsabhängigen radialen Aufweitung ein festanliegender Meßdraht aufgewickelt wird. Ein Ende des Meßdrahtes ist an der Mutter befestigt, während das andere Ende auf dem Umfang tangential beweglich bleibt. Nach dem Aufbringen der Vorspannkraft erfolgt eine radiale Aufweitung der Mutter, was eine Verschiebung des Meßdrahtes zur Folge hat, die längenmäßig erfaßt wird und der Vorspannkraft zugeordnet wird.

Ferner ist aus dem DE-GM 6608345 ein als Unterlagscheibe ausgebildeter Meßfühler bekannt, welcher die aufgebrachte Vorspannung in ein elektrisches Signal umsetzt.

Zum Nachweis von Spannungen können bei Werkstoffen mit ferromagnetischen Eigenschaften magnetische Meßverfahren herangezogen werden. Dazu gehören beispielsweise die Registrierung des Barkhausenrauschens, Permeabilitätsmessungen oder die Vielfacherfassung magnetischer Kenngrößen. Die physikalischen Ursachen der Spannungsempfindlichkeit ferromagnetischer Werkstoffe sind in magnetoelastischen Effekten begründet, die bei Werkstoffdeformation oder inneren Umordnungsvorgängen Änderungen in den Energiebeiträgen bewirken, welche die Domänenstruktur bestimmen. Diese Änderungen beeinflussen dann die magnetischen Kenngrößen.

Aus der Patentschrift DE-34 04 232 ist ein Verfahren zur Untersuchung von Materialeigenschaften und Materialzuständen von Ferromagnetika auf Grund magneto-mechanischer akustischer Emission des Ferromagnetikums in einem Magnetfeld bekannt geworden. Bei diesem Verfahren erfolgt die Registrierung der magneto-elastischen induzierten Emission unter der kontinuierlichen Veränderung der Frequenz des Magnetfeldes bei konstanter Amplitude der Wechselfeldmagnetisierungsfeldstärke für eine standardisierte ferromagnetische Probe und das zu prüfende ferromagnetische Material, wobei danach ein Vergleich der bei der standardisierten ferromagnetischen Probe erfolgten akustischen Emissionen und der vom zu prüfenden ferromagnetischen Material abgegebenen Emissionen erfolgt. Es ist dabei auch vorgesehen, dem magnetischen Wechselfeld einen veränderbaren Gleichfeldanteil zu überlagern. Dieser veränderbare Gleichfeldanteil dient dazu, zur Vormagnetisierung der Probe einen bestimmten Punkt auf der Hysteresekurve einzustellen oder dient zum Entmagnetisieren einer zuvor magnetisierten Probe.

Weiter ist aus einem Tagungsbericht (Tagesbericht zur Jahrestagung der DGZfP in Siegen 1988) zu entnehmen, daß bei einer Probe, die einer Zugbeanspruchung unterworfen wird, danach festgestellt werden kann, daß in jedem Bereich des zugehörigen Spannungs-Dehnungs-Diägramms ein charakteristisches magnetostriktives Schwingungsverhalten auftritt. Eine plastische Verformung der Probe macht sich durch eine Frequenzverschiebung zugeordneter Resonanzamplituden bemerkbar. Dabei erfolgte die magnetostriktive Schwingungsanregung ausschließlich im Messlängenbereich der Zugprobe mit einer den Meßlängenbereich umgebenden zylindrischen Spule. Das akustische Emissionsverhalten kann somit nur mit dem in diesem Bereich vorliegenden Zugspannungszustand in Beziehung gesetzt werden.

Ausgehend von diesem Stand der Technik liegt der Erfindung die Aufgabe zugrunde, ein Verfahren und ein Vorrichtung anzugeben, mit dem der Spannungszustand und die Dehnung eines ferromagnetischen Verbindungselementes, z.B. einer Schraubverbindung während oder nach dem Anziehen unabhängig von den vorliegenden Reibungsverhältnissen, ermittelt werden kann.

Diese Aufgabe wird erfindungsgemäß durch den Gegenstand des Anspruchs 1 gelöst. Vorteilhafte Ausbildungen ergeben sich aus den abhängigen Ansprüchen.

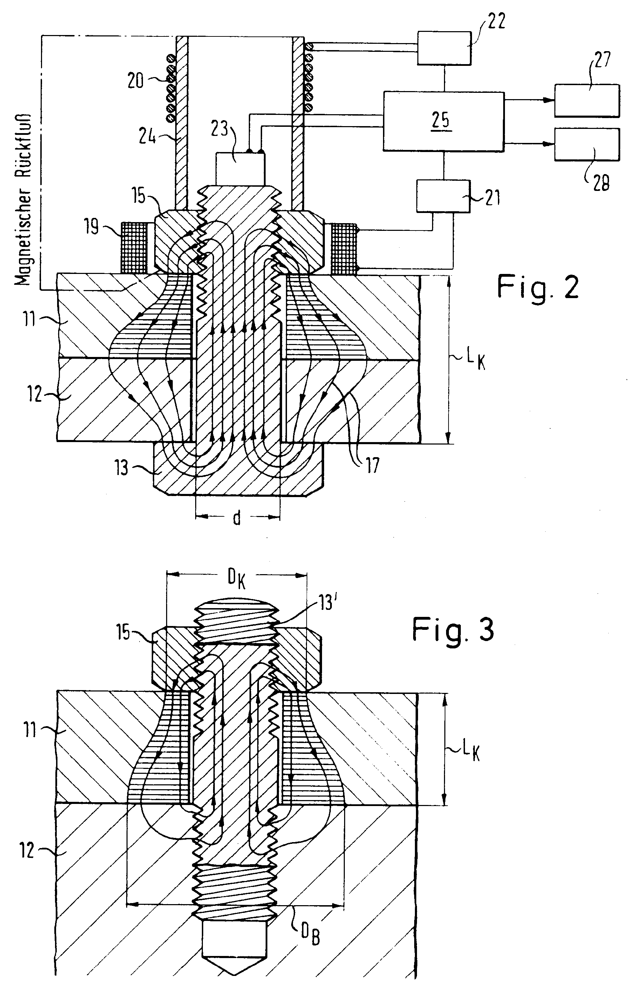

Beim Anziehen einer Schraubverbindung bildet sich in der Schraube ein mehrachsiger Spannungszustand aus. Dabei wird die Schraube im Bereich der Klemmlänge auf Zug beansprucht. Die mit der Schraube verspannten Teile werden auf Druck beansprucht. Die Druckspannungen in den verschraubten Bauteilen beschränken sich nicht nur auf das unmittelbare Gebiet unter dem Schraubenkopf, sondern breiten sich, wie die Figuren 2 und 3 zeigen, bei L_{K} = 8d sogar bis auf D_{B} = 3D_{K} über die Klemmlänge L_{K} aus, wenn die Bauteilabmessungen dies zulassen. D_{K} ist der Kopf- bzw. Mutternauflagedurchmesser. Hohe Kerbspannungen sind im Übergang vom Schaft zum Kopf und im Bereich des Gewindes zu erwarten. Im Schraubenkopf treten nebeneinander Zug- und Druckspannungen auf. Bei Schraube-Mutter-Verbindungen ist die Mutter überwiegend druckbeansprucht (Decker, Karl-Heinz: Maschinenelemente, Gestaltung und Berechnung, 8. Auflage, Hanser-Verlag, 1982, S.142).

Bei ferromagnetischen Werkstoffen wird die Ausbildung der magnetischen Bereichsstruktur (Weiss'sche Bezirke) sowohl von Spannungen im Werkstoffinnern als auch von mechanischen Spannungen, die von außen auf den Werkstoff einwirken, beeinflusst. Theoretischen Betrachtungen von Charles Kittel zufolge kann die Anordnung der magnetischen Bezirke unter Berücksichtigung von vier Energiebeiträgen annähernd beschrieben werden. Die Ausbildung der Struktur erfolgt unter der Bedingung, daß die Summe der daran teilnehmenden Energien minimal wird. Das magnetostriktive Verhalten eines ferromagnetischen Werkstoffes, d.h. seine Formänderung bei Anwesenheit eines Magnetfeldes, wird dabei im wesentlichen durch den magnetoelastischen Energiebeitrag bestimmt, der für isotrope Festkörper von der Magnetostriktionskonstanten und der Größe der mechanischen Spannungen abhängig ist. Die Magnetostriktionskonstante charakterisiert die mittlere spontane Gitterverzerrung, welche gleichzeitig mit dem Vorliegen der spontanen Magnetisierung innerhalb der magnetischen Bezirke einhergeht (Reviews of Modern Physics, Vol. 21, Number 4, October 1949, Seiten 541, 583).

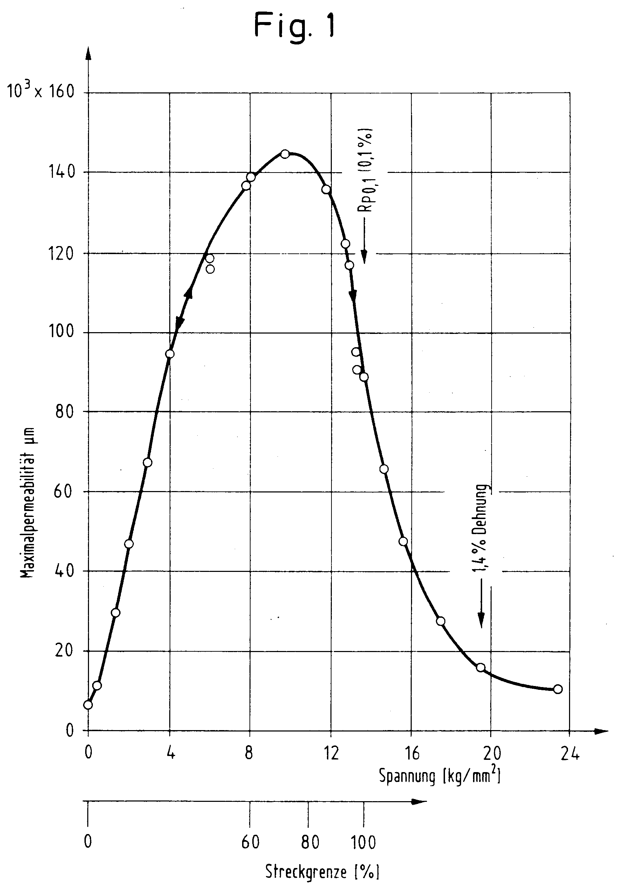

Wenn daher auf einen Werkstoff, der magnetische Eigenschaften hat, von außen mechanische Spannungen einwirken, ändert sich demzufolge nicht nur sein magnetostriktives Verhalten, sondern auch andere spannungsabhängige magnetische Größen, wie z.B. die Permeabilität oder die davon abhängige magnetische Induktion. So zeigen Werkstoffe mit positiver Magnetostriktion im allgemeinen, wie in Fig. 1 gezeigt, eine Zunahme der Permeabilitäts- und Induktionswerte bei bis zur elastischen Dehnungsgrenze des Materials anwachsenden mechanischen Zugspannungen. Hingegen nimmt die Permeabilität und entsprechend die Induktion ab bei Spannungen, die zu Dehnungen oberhalb der elastischen Dehnungsgrenze führen, so geschrieben in R.M. Bozorth: Ferromagnetism. D. Van Nostrand Company, Inc., New York, 1955, S. 595-599.

Es kann also davon ausgegangen werden, daß bei einer fertigmontierten Schraubverbindung in den spannungsbeeinflussten Bereichen eine vom vorherrschenden Spannungszustand mitbestimmte magnetische Bereichsstruktur vorliegen wird. Läßt man somit örtlich gezielt auf die spannungsbeeinflussten Bereiche ein äußeres Magnetfeld einwirken und wird dabei das magnetostriktive Verhalten erfaßt, so werden mit dieser Messung indirekt auch die an diesem Ort vorliegenden Spannungsverhältnisse miterfaßt. Dies ist deshalb der Fall, weil das magnetostriktive Verhalten von den vorliegenden Spannungen direkt abhängig ist.

Der Erfindung liegt die neue Erkenntnis zugrunde, daß der die Klemmkraft charakterisierende Vorspannungszustand eines Verbindungselementes, z.B. einer Schraubverbindung, auch am Einsatzort im eingebauten Zustand geprüft werden kann, wenn durch das äußere Magnetfeld nur (mindestens) ein Teilbereich der Verbindung erfaßt wird, welcher dem durch die Verbindung erzeugten Spannungszustand unterworfen ist. Bei einer Schraubverbindung genügt es demnach, nur einen mit Spannungslinien durchsetzten Teilbereich zu erfassen, auch wenn der dort vorliegende Spannungszustand im Vergleich zum im interessierenden Schaftbereich herrschenden Spannungszustand unterschiedlich ist. Denn dadurch, daß sich der Kraftfluß-bzw. der Spannungslinienverlauf im Bereich des Verbindungselementes konzentriert und in sich geschlossen ist, stehen die in verschiedenen Teilbereichen vorliegenden Spannungsverhältnisse mit denen im Schaftbereich in direktem Wirkungszusammenhang.

Es wurde also erkannt, daß z.B. bei einer Schraubverbindung vom äußeren Magnetfeld nicht unbedingt auch der Schaft der Schraube erfaßt zu werden braucht, sondern daß es genügt, wenn ein zugänglicher Teil der Schraubverbindung, z.B. der Schraubenkopf, vom Magnetfeld erfaßt wird. So wird durch die Erfindung erstmals ein Verfahren geschaffen, das es trotz unzugänglichem Schaft erlaubt, die für die Sicherheit der Verbindung wichtige Spannung im Schaft zu ermitteln.

Die Erfindung betrifft auch eine Vorrichtung gemäß Patentanspruch 13 zur Durchführung des Verfahrens. Diese Vorrichtung ist weiter ausgehaltet durch die Merkmale der Patenstansprüche 14 bis 26.

Die Erfindung wird nun unter Bezugnahme auf die Zeichnungen näher erläutert. Es zeigt:
- Fig. 1: Permeabilitätsverlauf in Abhängigkeit einer äußeren Zugspannung
- Fig. 2: den Kraftfluß in einer Schraubverbindung, wobei schematisch auch die Vorrichtung zur Durchführung des Verfahrens dargestellt ist,
- Fig. 3: den Kraftfluß in einer Schraubverbindung mit Stiftschraube,
- Fig. 4: eine schematische Darstellung von Spule und Aufnehmer für die Durchführung einer Messung bei einer Innenkantschraube,
- Fig. 5: eine schematische Darstellung von Spule und Aufnehmer bei der Durchführung einer Messung bei einer Innenkantschraube,
- Fig. 6: eine schematische Darstellung eines Ausführungsbeispiels eines Handgerätes zur zerstörungsfreien Ermittlung des Spannungszustandes im Verbindungselement,
- Fig. 7: Schwingungsspektrogramme bei der Messung eines Bauteils vor und nach einer Beanspruchung,
- Fig. 8: Erscheinungsformen der Schwingungsspektren und ihre Beziehung zum Spannungs-Dehungs-Diagramm,
- Fig. 9: Meßergebnisse bei der Prüfung einer Schraubverbindung, bei der die Schraubenvorspannung durch Verändern des Anziehmomentes erhöht ist,
- Fig. 10: Meßergebnisse im Sinne von Fig. 9 mehrerer entsprechender Schraubverbindungen, die jeweils einen unterschiedlichen Vorspannungszustand aufweisen.

Fig. 1 zeigt den bereits erwähnten Einfluß einer mechanischen Zugspannung auf die magnetische Maximalpermeabilität bei einem Werkstoff mit magnetostriktiv positiven Eigenschaften.

In Fig. 2 ist eine Schraubverbindung ersichtlich, mit der die Teile 11 und 12 mittels der Schraube 13 und der Mutter 15 miteinander verbunden sind. Mit den Bezugsziffern 17 sind die Spannungslinien bezeichnet.

Die schematisch eingezeichnete Vorrichtung zur Durchführung des erfindungsgemäßen Verfahrens besitzt eine Spule 19, welche an einen Wechselstromgenerator 21 angeschlossen ist und der von einer Signalverarbeitungs- und Steuereinrichtung 25 angesteuert wird. Die Frequenz dieses Wechselstromgenerators 21 kann in einem Bereich von etwa 0,1 kHz bis etwa 1 MHz verändert werden. An einem zugänglichen Teil der Schraube 13 ist ein piezo-elektrischer Aufnehmer 23 angekoppelt. Dieser Aufnehmer 23 ist an eine Signalverarbeitungs- und Steuereinrichtung 25 angeschlossen. Die Einrichtung 25 liefert Signale an eine Anzeigevorrichtung 27 und/oder eine Schraubvorrichtung 28. Die dargestellte Meßvorrichtung kann also auch dazu benützt werden, um beim Erreichen eines vorbestimmten Spannungszustandes den Anziehvorgang zu beenden.

Das erfindungsgemäße Verfahren eignet sich zur Kontrolle von verschiedenen Arten von Schraubverbindungen, also beispielsweise auch für eine Verbindung mit Stiftschraube 13', wie sie beispielsweise in Fig. 3 dargestellt wird. Grundsätzlich können aber auch andere am Einsatzort einer Spannung unterworfene Verbindungselemente geprüft werden.

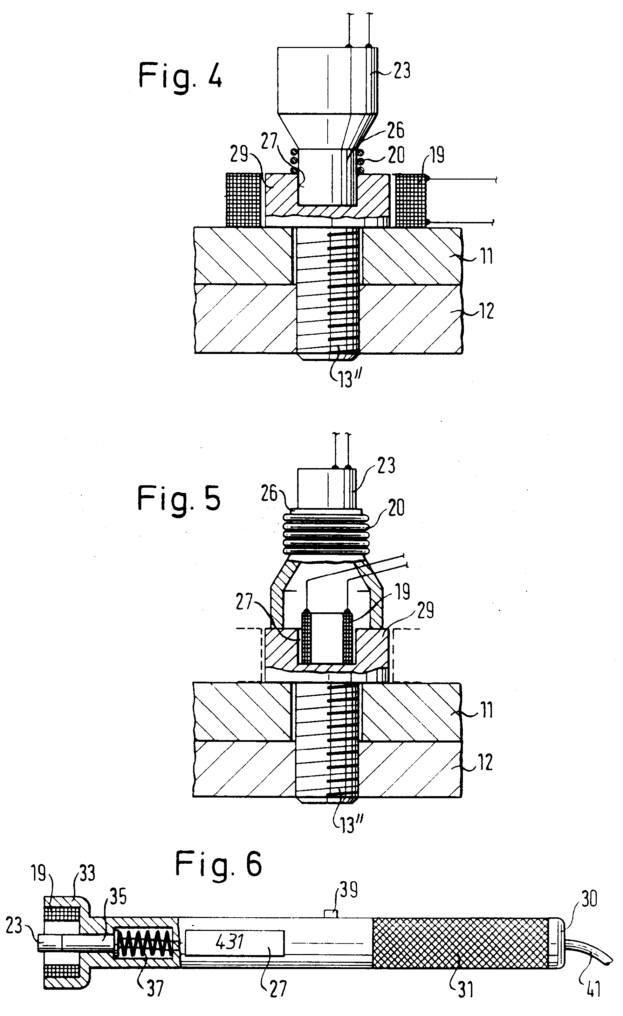

In Fig. 4 ist eine Schraubverbindung mit einer Innenkantschraube 13'' dargestellt. Solche Schrauben sind auch unter Bezeichnung "Imbus"-Schrauben bekannt. Wiederum ist eine Spule 19 dargestellt, welche in der Lage ist, mindestens einen unter Spannung stehenden Teil der Schraube 13'' mit einem magnetischen Wechselfeld zu beaufschlagen. Der Aufnehmer 23 ist über das Kopplungsteil 26, welches in die Innensechskantöffnung 27 des Schraubenkopfs 29 eingeführt ist, in Kontakt mit der Schraube 13'.

Wie Fig. 5 zeigt, ist es auch möglich, die Spule 19 in die Innensechskantöffnung 27 einzusetzen. Wiederum ist der Aufnehmer 23 über ein Kopplungsstück 26 in mechanischem Kontakt mit dem Schraubenkopf 29.

Es gibt verschiedene Möglichkeiten zur praktischen Ausbildung der vorangehend schematisch dargestellten Meßvorrichtung. So zeigt Fig. 6 ein stabförmiges Handgerät 30 mit einem Griff 31 und einer Anzeigevorrichtung 27. Der Kopf 33 des Gerätes 30 enthält die Spule 19 und den Aufnehmer 23. Der Aufnehmer 23 ist auf einem Schaft 35 angeordnet, welcher durch eine Feder 37 in Ruhezustand in der eingezeichneten Lage gehalten wird. Wird der Kopf 33 über einen Schraubenkopf, eine Mutter oder ein Teil eines anderen Verbindungselementes gestülpt, so liegt der Aufnehmer 23 auf dem Verbindungselement auf. Bei der Betätigung eines Druckkopfes 39 erfolgt dann die Messung, wobei das Resultat in der Anzeigevorrichtung 27 abgelesen werden kann. Die Stromquelle, der Frequenzgenerator und die Auswerteschaltung können sich bei entsprechender Miniaturisierung innerhalb des Handgerätes 30 befinden. Andernfalls ist eine Verbindung über ein Kabel 41 möglich.

Es ist wünschenswert, aber nicht unbedingt erforderlich, daß der Aufnehmer 23 jeweils in Kontakt mit dem Verbindungselement 13 steht. Da sich Schallwellen in Metallen gut fortpflanzen, könnte der Aufnehmer 23 auch z.B. auf das Werkstück 11 aufgelegt werden. Bei Bedarf ist es auch möglich, die Erregerspule und/oder den Aufnehmer nicht wie in den dargestellten Beispielen anzubringen, sondern sie z.B. seitlich am zugänglichen Teil des Verbindungselementes anzuordnen. Abweichend von den abgebildeten Figuren sind dementsprechend Spulenanordnungen möglich, bei denen das magnetische Wechselfeld in bezug zu dem Teil des Verbindungselementes bzw. des Spannungsfeldes unsymmetrisch einwirkt.

Mit dem Verfahren und der Vorrichtung sind auch Verbindungselemente prüfbar, bei denen die einzelnen Teile der Verbindung nicht ausschließlich ferromagnetische Eigenschaften aufweisen. Bei einer Schraubverbindung genügt es z.B., daß entweder die Mutter oder die Schraube ferromagnetisch und gleichzeitig dem Spannungsfeld der Verbindung ausgesetzt ist.

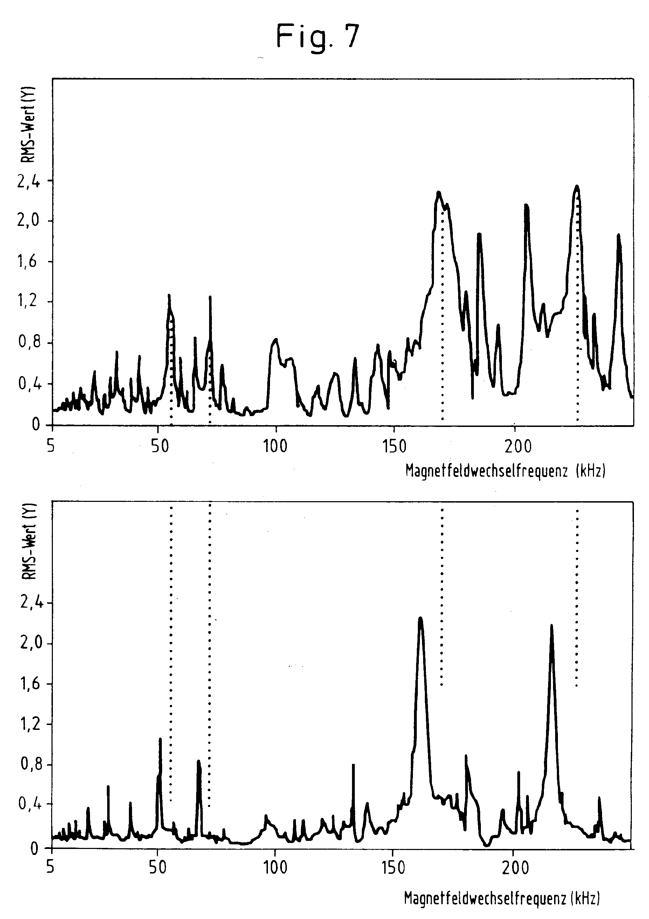

In Fig. 7 ist dargestellt, wie sich das Amplitudenspektrum einer Probe ändert, wenn sie gedehnt wird. Bevor z.B. eine Schraube angezogen wird und Kräfte wie in Fig. 2 gezeigt wirksam werden, ergibt sich ein Amplitudenspektrum wie dies im oberen Bild von Fig. 7 beispielsweise dargestellt ist. Erfolgt eine Beanspruchung, die zu einer plastischen Verformung führt, so ergibt sich ein Spektrum, wie es im unteren Bild von Fig. 7 ebenfalls beispielsweise ersichtlich ist. Es liegt dann ein vergleichsweise wenig strukturiertes Spektrum vor, welches aber immer noch scharf ausgebildete Resonanzstellen aufweist. Ein Vergleich mit dem oberen Bild zeigt, daß eine Frequenzverschiebung stattgefunden hat.

Dazu kann grundsätzlich festgestellt werden, daß die Frequenzverschiebung ein Ausdruck für die Dehnung und die Amplitudenänderung ein Ausdruck für die Spannung im Werkstoff des Einzelteils ist. Die Auswertung der verschiedenen Spektren ermöglicht nun zweierlei. Erstens kann für den Werkstoff des Bauteils die Spannungs-Dehnungs-Kurve ermittelt werden. Zweitens kann von einem Bautiel festgestellt werden, welches sein Spannungszustand ist, d.h. auf welchem Punkt es sich auf der Spannungs-Dehnungs-Kurve befindet.

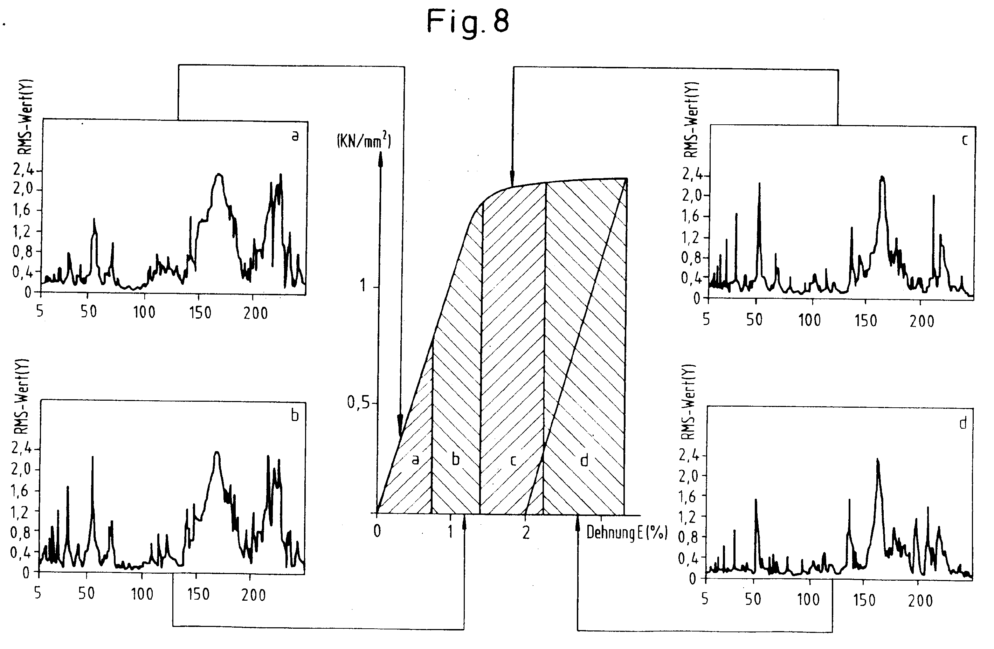

Fig. 8 zeigt die Beziehung der sich verändernden Spektrogramme a, b, c, d zur Spannungs-Dehnungs-Kurve. Unmittelbar nach dem Auftreten einer Zugspannung treten deutliche Veränderungen im Resonanzverhalten im Vergleich zum Ausgangsspektrum Fig. 7 oben auf. Besonders auffällig ist, daß Spektren, welche dem linear-elastischen Bereich der Spannungs-Dehnungs-Kurve entsprechen, sich stark von jenen unterscheiden, die dem Bereich der plastischen Verformung der Spannungs-Dehnungs-Kurve entsprechen. Der Übergang vom elastischen Bereich zum Bereich der plastischen Verformung wird gekennzeichnet durch scharfe und weniger strukturierte Resonanzen. Diese Veränderung im Amplitudenspektrum kündigt sich bereits im Spektrum b an.

In Fig. 8 sind lediglich vier Spektren a, b, c, d dargestellt, wie sie für die entsprechenden Abschnitte a, b, c und d der Spannungs-Dehnungs-Kurve typisch sind. In Wirklichkeit ergibt sich für jeden Punkt der Spannungs-Dehnungs-Kurve ein anderes Spektrum. Ist somit die Spannungs-Dehnungs-Kurve für den betreffenden Werkstoff des Bauteils bekannt, so läßt sich aus dem jeweiligen Spektrogramm ermitteln, welcher Punkt auf der Spannungs-Dehnungs-Kurve durch das Anziehen des Verbindungselementes erreicht wurde. Die Feststellung des Punktes auf der Spannungs-Dehnungs-Kurve kann beispielsweise dadurch erfolgen, daß man den Flächeninhalt unter der Spektrumkurve ermittelt und daraus den entsprechenden Punkt auf der Spannungs-Dehnungs-Kurve bestimmt.

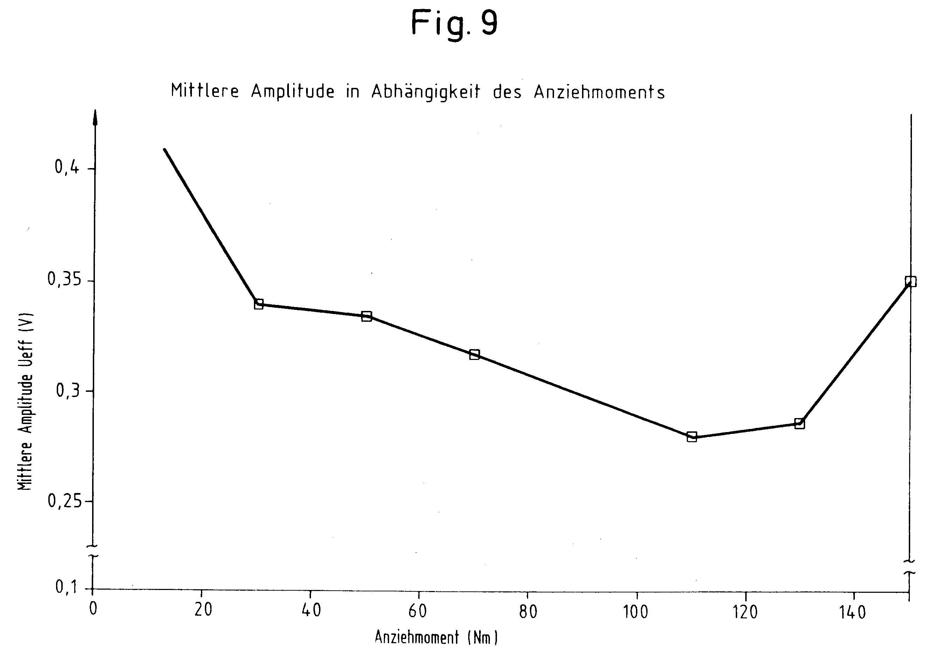

Fig. 9 zeigt Meßergebnisse der Prüfung einer Schraubverbindung, bei der die Vorspannung der Schraube durch Verändern des Anziehmomentes erhöht worden ist. Die magnetostriktive Schwingungsanregung zur Ermittlung des Vorspannungszustandes erfolgt dabei mit einer die Mutter der Schraubverbindung umgebenden Wechselfeldspule, wie schematisch in Fig. 2 dargestellt. Durch Auswertung der zu jedem Anziehmoment ermittelten Schwingungsspektren hinsichtlich des mittleren Amplitudenwertes, welcher proportional zum Flächeninhalt unter der Spektrumkurve ist, ergibt sich, daß in Abhängigkeit des Anziehmomentes die mittlere magnetostriktive Schwingungsamplitude zunächst mit wachsendem Anziehmoment abnimmt, dann ein Minimum durchläuft und anschließend wieder zunimmt. An dieser Stelle sei darauf hingewiesen, daß es häufig vorteilhaft ist, bei der Auswertung relative Amplitudenänderungen zugrunde zu legen. Hierunter wird die Änderung z.B. der mittleren Amplitude bezogen auf die mittlere Amplitude eines Ausgangszustands verstanden. Die Auswertung relativer Signaländerungen ist insbesondere dann vorteilhaft, wenn der Aufnehmer 23 z.B. auf das Werkstück 11 aufgelegt wird.

Bei der Prüfung von eingebauten standardisierten Verbindungselementen kann so vorgegangen werden, daß zuerst von einem als Probe dienenden standardisierten Verbindungselement die Spannungs-Dehnungs-Kurve und die zugeordneten magnetostriktiven Schwingungsspektrogramme ermittelt werden. Dabei ist zu berücksichtigen, daß zur Aufnahme der Spektrogramme die Spule und der Aufnehmer so an dem zugänglichen Teil des Verbindungselementes zueinander angeordnet sind, wie es beim eingebauten standardisierten Verbindungselement der Fall sein wird. Die diesbezüglichen Angaben stehen dann in einem Speicher der Auswerteschaltung für die Messung als Bezugswerte zur Verfügung. Bei der Prüfung des jeweiligen eingebauten standardisierten Verbindungselements wird das vom Aufnehmer abgegebene Signal mit den gespeicherten Werten der Spannungs-Dehnungs-Kurve verglichen, um ein Meßergebnis für den Spannungszustand zu liefern.

Es ist auch möglich, mit einem standardisierten Verbindungselement Bezugswerte zu ermitteln und zur Schaffung von Bezugsgrößen in der Spannungs-Dehnungs-Kurve zu benutzen und in ein Rechenprogramm umzusetzen. Dieses Rechenprogramm wird dann beispielsweise von einem Mikroprozessor in der Signalverarbeitungseinrichtung benutzt, um das bei der Prüfung eines eingebauten Verbindungselementes erzeugte Signal mit den genannten Bezugsgrößen in Bezug zu setzen, um ein Meßergebnis für den Spannungszustand zu erzielen.

In einer weiteren Ausgestaltung des erfindungsgemäßen Verfahrens wird dem magnetischen Wechselfeld, dessen Frequenz kontinuierlich verändert wird, gleichzeitig ein magnetisches Gleichfeld überlagert, dessen Stärke quasi-statisch veränderbar ist. Dies führt dazu, daß der Bereich des Verbindungselements, der vom magnetischen Wechselfeld magnetostriktiv angeregt wird, vormagnetisiert wird. Infolge dieser Maßnahme wird in diesem Bereich die magnetische Bereichstruktur sowohl von den vorliegenden mechanischen Spannungen als auch von der Richtung und Stärke des quasi-statischen magnetischen Gleichfeldes bestimmt. Das magnetische Gleichfeld wird dabei quasi-statisch so ausgesteuert, daß seine veränderliche Stärke z.B. ausgehend von der Feldstärke 0 Werte annimmt, die zyklisch zwischen zwei Feldstärkewerten verändert werden, so daß Hystereseerscheinungen der Meßgröße in Abhängigkeit der veränderlichen Gleichfeldstärke mit dem Parameter des vorliegenden Spannungszustandes aufgenommen werden können. Magnetische Hystereseerscheinungen treten bei allen ferromagnetischen Werkstoffen auf, insbesondere bei den Werkstoffen, die für Verbindungselemente Anwendung finden.

Das magnetische Gleichfeld wird dabei, wie in Fig. 2 dargestellt, mit einer Gleichfeldspule 20, die auf einen hohlzylindrischen ferromagnetischen Kern 24 gewickelt ist, erzeugt. Die Gleichfeldspule 20 wird mit veränderbarem Gleichstrom von einem bipolaren Netzgerät 22, welches von der Steuer- und Auswerteeinrichtung 25 angesteuert ist, versorgt. Dadurch daß der hohlzylindrische Kern 24 mit einem seiner offenen Enden direkt auf der Schraubenmutter 15 aufsitzt, hat das im Kern 24 verlaufende magnetische Gleichfeld seine Fortsetzung in der Schraubenmutter und überlagert somit das von der Spule 19 herrührende Wechselfeld.

Das magnetische Gleichfeld kann aber auch ohne weiteres über ein ferromagnetisches Kopplungsteil 26, wie es die Fig. 4 und 5 zeigen, in das spannungsbeaufschlagte Bauteil geführt werden, dadurch daß die Gleichfeldspule 20 auf dem Kopplungsteil 26 angeordnet wird. Das Kopplungsteil 26 hat dann zweierlei Funktionen, nämlich einerseits die Übertragung der Meßsignale vom Anregungsort zum Aufnehmer 23 und andererseits die Einleitung des Gleichfeldflußes in das zu prüfende Verbindungsteil. Es ist auch möglich, der Wechselfeldspule 19 einen veränderbaren Gleichfeldanteil zu überlagern, so daß nur eine Spule für das magnetische Gleich- und Wechselfeld erforderlich ist.

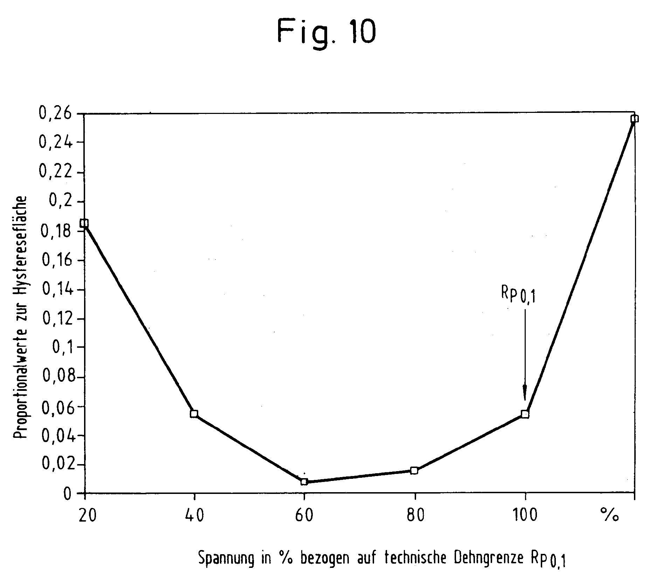

In Fig. 10 sind dazu Meßergebnisse der Prüfung mehrerer entsprechender Schraubverbindungen dargestellt, die jedoch jeweils unterschiedliche aber definierte Vorspannungszustände aufweisen. Die Prüfung erfolgt wie in Fig. 9 beschrieben, jedoch mit einem auf die Schraubenmutter zusätzlich axial einwirkenden und sich verändernden magnetischen Gleichfeld.

Es versteht sich von selbst, daß die maximale Magnetisierungsfeldstärke höchstens den Wert der Sättigungsfeldstärke des zu untersuchenden Werkstoffs erreichen muß. Bei vergleichenden Untersuchungen ist jedoch darauf zu achten, daß die Feldstärkeaussteuerung jeweils identisch erfolgt. Die Auswertung der Abhängigkeit der veränderlichen Gleichfeldstärke und in der Abhängigkeit von dem jeweilig in der Schraubenmutter vorliegenden Spannungszustand aufgenommenen Schwingungsspektren zeigt, daß ein vom Spannungszustand abhängiges magnetostriktives Hystereseverhalten der Amplituden auftritt. Die Ordinatenwerte des Diagramms in Fig. 10 werden hierbei durch Werte gebildet, die der Fläche proportional sind, welche die magnetostriktive Hysterese-Schleife einschließt. In Abhängigkeit von der Schraubenvorspannung ergibt sich ein parabelförmiger Verlauf der Hysteresewerte mit einem Minimum bei Spannungen unterhalb der technischen Dehngrenze R_{p0,1}. Das bedeutet, daß bei Spannungen, die ober- oder unterhalb des Hystereseminimums liegen, die magnetostriktiven Hystereseerscheinungen ausgeprägter sind. Im Minimum zeigen die Amplituden der Schwingungsspektren, die beim zyklischen Aussteuern des Gleichfelds erhalten werden, nur geringfügige Änderungen, was eine geringe Hysteresefläche zur Folge hat.

Der Schraubenvorspannungsbereich in Fig. 10 relativ zur technischen Dehngrenze R_{p0,1} stimmt mit dem entsprechenden Spannungsbereich des Diagramms in Fig. 1 überein, welches die Spannungsabhängigkeit der magnetischen Maximalpermeabilität aufzeigt. Nachdem die Schraubverbindung ebenfalls magnetostriktiv positive Eigenschaften hat, kann das in Fig. 10 aufgefundene Hystereseminimum mit dem Permeabilitätsmaximum in Fig. 1 in Verbindung gebracht werden. Dieses tritt ebenfalls unterhalb der technischen Dehngrenze R_{p0,1} auf und befindet sich an der elastischen Dehngrenze.

Das erfindungsgemäß aufgezeigte Prüfverfahren bietet im Unterschied zu allen bisherigen Methoden somit erstmals auch eine einfache, leicht handhabbare Möglichkeit, die elastische Dehngrenze mit großer Genauigkeit zu ermitteln. Insbesondere sei darauf hingewiesen, daß die Bestimmung dieser Werkstoffkenngröße auf Signalen beruht, die der Werkstoff selbst aktiv liefert und die von submikroskopischen Vorgängen im Werkstoffinneren hervorgerufen werden. Längen- und Kraftmessungen mit ihren Ungenauigkeiten wie bei herkömmlichen Methoden sind hier nicht erforderlich.

Mit dem erfindungsgemäßen Meßverfahren ist es somit möglich, die Vorspannung exakt und an der elastischen Dehngrenze orientiert definiert einzustellen. Insbesondere ist es nicht erforderlich, zuvor den genauen Zahlenwert der mechanischen Werkstoffkenngrößen zu wissen, da sich die Dehngrenze in dem erfindungsgemäßen Prüfverfahren beim Anziehen der Schraubverbindung durch das Minimalwerden der magnetostriktiven Hysteresewerte anzeigt. Es läßt sich somit eine wesentlich erhöhte Montagesicherheit bei Schraubverbindungen und ohne daß Reibungsverluste eine Rolle spielen verwirklichen.

Bei der Prüfung von eingebauten Verbindungselementen ist es ebenfalls möglich, den vorhandenen Spannungszustand eindeutig zu identifizieren. Dabei kann so vorgegangen werden, daß zuerst von einem als Probe dienenden standardisierten Bauteil die Spannungs-Dehnungskurve und das zugehörige funktional von der Spannung abhängige magnetostriktive Hystereseverhalten ermittelt wird. Die diesbezüglichen Angaben stehen dann in einem Speicher der Auswerteeinrichtung für die Messung als Bezugswerte zur Verfügung. Zur Bestimmung, ob die Vorspannung größer oder kleiner als die elastische Dehngrenze ist, kann entweder die Erscheinungsform der Hystereseschleife oder das magnetostriktive Schwingungsspektrum berücksichtigt werden, welche sich beide unterhalb der elastischen Dehngrenze deutlich anders ausbilden als über dieser Grenze. Als Beispiel dafür sei auf die Fig. 8 verwiesen, wo die Teilbilder, a, b Schwingungsspektren unterhalb und die Teilbilder c, d oberhalb der Dehngrenze darstellen.

In einer weiteren Ausbildung des erfindungsgemäßen Verfahrens wird das zuvor geschilderte Hystereseverhalten ohne überlagertes Gleichfeld ermittelt, dadurch daß die Amplitude des in seiner Frequenz kontinuierlich veränderten magnetischen Wechselfeld schrittweise zwischen einem niedrigen und hohen Amplitudenwert zyklisch verändert wird in der Weise, daß nach Beendigung des Zyklus die Wechselfeldamplitude ihren ursprünglichen Wert aufweist. Zwischen der schrittweisen Erhöhung der Amplitude erfolgt das Durchstimmen der Magnetfeldwechselfrequenz. Es versteht sich von selbst, daß die maximale Wechselfeldamplitude nur solche Werte anzunehmen braucht, wie zur magnetischen Sättigung des zu untersuchenden Verbindungselement notwendig ist.

Diese Verfahrensweise hat den Vorteil, daß zur Ermittlung des Hystereseverhaltens lediglich eine Spule erforderlich ist und Gleichstromnetzgerät entbehrlich ist. Bezüglich der Verfahrensweise zur Prüfung von Verbindungselementen wird so vorgegangen, wie bei den Ausführungen zur Prüfung mit überlagertem Gleichfeld.

Ergänzend wird darauf hingewiesen, daß sich das erfindungsgemäße Verfahren zur zerstörungsfreien Ermittlung des Vorspannungszustands ferromagnetischer Verbindungselemente selbstverständlich auch für Werkstoffe eignet, die magnetostriktiv negative Eigenschaften aufweisen.

## Patentansprüche

1. Verfahren zur zerstörungsfreien Ermittlung des Spannungszustandes ferromagnetischer eingebauter Verbindungselemente, durch Anlegen eines magnetischen Wechselfeldes an das Verbindungselement, Erfassen der hervorgerufenen magnetostriktiven, akustischen Schwingungen und Auswerten des gewonnenen Signals.

2. Verfahren nach Anspruch 1, dadurch gekennzeichnet, daß dem magnetischen Wechselfeld ein veränderbares magnetisches Gleichfeld überlagert wird.

3. Verfahren nach Anspruch 1 oder 2, dadurch gekennzeichnet, daß das magnetische Gleichfeld quasi-statisch so gesteuert wird, daß seine veränderliche Stärke ausgehend von einem Ausgangswert zyklisch zwischen zwei Feldstärkewerten verändert wird.

4. Verfahren nach einem der vorhergehenden Ansprüche, dadurch gekennzeichnet, daß die Frequenz des magnetischen Wechselfeldes verändert wird und in Abhängigkeit von der Frequenz ein magneto-mechanisch akustisches Schwingungsspektrum aufgenommen wird.

5. Verfahren nach einem der vorhergehenden Ansprüche, dadurch gekennzeichnet, daß das bei der Prüfung des Verbindungselementes gewonnene Schwingungsspektrum mit dem einer Spannungs-Dehnungs-Kurve zugeordneten Schwingungsspektrum verglichen wird, um ein Meßergebnis für den Spannungszustand zu gewinnen.

6. Verfahren nach einem der vorhergehenden Ansprüche, dadurch gekennzeichnet, daß mit einem standardisierten Verbindungselement Referenzwerte ermittelt und zur Schaffung von Referenzgrößen in der Spannungs-Dehnungs-Kurve verwendet werden, wobei das bei der Prüfung eines Verbindungselementes erzeugte Schwingungsspetrum mit diesen Referenz-größen in Beziehung gesetzt wird, um ein Meßergebnis für den Spannungszustand zu gewinnen.

7. Verfahren nach einem der vorhergehenden Ansprüche, dadurch gekennzeichnet, daß ein Zahlenwert ermittelt wird, der in einem funktionalen Zusammenhang steht mit dem Flächeninhalt unter dem ermittelten Schwingungsspektrum und dem ein Punkt auf der Spannungs-Dehnungs-Kurve zugeordnet wird.

8. Verfahren nach einem der vorhergehenden Ansprüche, dadurch gekennzeichnet, daß ein Zahlenwert ermittelt wird, der in funktionalem Zusammenhang steht mit dem Flächeninhalt der magnetostriktiven Hystereseschleife und dem ein Punkt auf der Spannungs-Dehnungs-Kurve zugeordnet wird.

9. Verfahren nach einem der vorhergehenden Ansprüche, dadurch gekennzeichnet, daß ein nach der Auswertung gewonnenes Ausgangssignal zur Anzeige des Meßwertes einer Anzeigevorrichtung zugeführt wird oder zur Steuerung einer Schraubvorrichtung benutzt wird.

10. Verfahren nach einem der vorhergehenden Ansprüche, dadurch gekennzeichnet, daß die Frequenzverschiebung einzelner Linien eines Spektrums gegenüber einem Referenzspektrum gemessen und als Maß für die Dehnung des Verbindungselementes gewonnen wird.

11. Verfahren nach einem der vorhergehenden Ansprüche, dadurch gekennzeichnet, daß die Amplitudenänderung einzelner Linien des Spektrums gegenüber einem Referenzspektrum gemessen und als Maß für die Spannung im Verbindungselement gewonnen wird.

12. Verfahren nach einem der vorhergehenden Ansprüche, dadurch gekennzeichnet, daß durch Verbindung der Messungen der Frequenzverschiebung und der Amplituden-änderung die Spannungs-Dehnungs-Kurve aufgenommen wird.

13. Vorrichtung zur zerstörungsfreien Ermittlung des Spannungszustands ferromagnetischer eingebauter Verbindungselemente, mit einem Wechselstromgenerator (21) mit veränderbarer Frequenz, einer an dem Wechselstromgenerator (21) angeschlossenen Spule (19) zur Erzeugung eines Magnetfelds in mindestens einem Teil des Verbindungselementes (13), einem an das Verbindungselement (13) anlegbaren akustisch-elektrischen Aufnehmer (23) und einer Signalverarbeitungs- und Steuereinrichtung (25).

14. Vorrichtung nach Anspruch 13, gekennzeichnet durch einen Gleichstromgenerator (22), der mit der Spule (19) zur Erzeugung eines magnetischen Gleichfeldes verbunden ist.

15. Vorrichtung nach einem der Ansprüche 13 oder 14, gekennzeichnet durch eine Gleichfeldspule (20) zur Erzeugung eines Magnetfeldes in mindestens einem Teil des Verbindungselementes (13), wobei die Gleichfeldspule (20) mit einem Gleichstromgenerator (22) verbunden ist.

16. Vorrichtung nach einem der Ansprüche 13 bis 15, dadurch gekennzeichnet, daß eine Anzeigevorrichtung (27) zur Anzeige des Spannungszustandes im Verbindungselement (13) an die Auswerteschaltung (25) angeschlossen ist.

17. Vorrichtung nach einem der Ansprüche 13 bis 16, dadurch gekennzeichnet, daß eine Schraubvorrichtung (28) an die Auswerteschaltung (25) angeschlossen ist.

18. Vorrichtung nach einem der Ansprüche 13 bis 17, dadurch gekennzeichnet, daß die Spule (19 bzw. 20) und der Aufnehmer (23) praktisch konzentrisch zueinander angeordnet sind.

19. Vorrichtung nach einem der Ansprüche 13 bis 18, dadurch gekennzeichnet, daß der Aufnehmer (23) auf einem Kopplungsstück (26) angeordnet ist.

20. Vorrichtung nach Anspruch 19, dadurch gekennzeichnet, daß die Spule (19 bzw. 20) innerhalb des Kopplungsstücks (26) angeordnet ist.

21. Vorrichtung nach einem der Ansprüche 13 bis 20, dadurch gekennzeichnet, daß sie als stabförmiges Handgerät ausgebildet ist, welches einen Kopf (33) aufweist, in welchem die Spulen (19 bzw. 20) und der Aufnehmer (23) angeordnet sind.

22. Vorrichtung nach Anspruch 21, dadurch gekennzeichnet, daß der Aufnehmer (23) im Kopf (33) gegen die Kraft einer Feder (37) axial verschiebbar ist.

23. Vorrichtung nach einem der Ansprüche 13 bis 22, dadurch gekennzeichnet, daß die Wechselfeldspule (19) und die Gleichfeldspule (20) im wesentlichen konzentrisch zueinander angeordnet sind.

24. Vorrichtung nach einem der Ansprüche 13 bis 23, dadurch gekennzeichnet, daß die Gleichfeldspule (20) im wesentlichen senkrecht zur Wechselfeldspule (19) angeordnet ist.

25. Vorrichtung nach einem der Ansprüche 13 bis 24, dadurch gekennzeichnet, daß die Gleichfeldspule (20) auf einem Kopplungsteil (26) angeordnet ist, wobei dieses einerseits die Übertragung der Meßsignale vom Anregungsort zum Aufnehmer (23) und andererseits die Einleitung des Gleichfeldflusses in das zu prüfende Verbindungselement (13) vornimmt.

26. Vorrichtung nach einem der Ansprüche 13 bis 25, dadurch gekennzeichnet, daß die Spulen (19 bzw. 20) in einem Handhabungsautomaten integriert sind.

## Claims

1. A method for the non-destructive determination of the state of stress of ferromagnetic installed connecting elements, by the application of a magnetic alternating field to the connecting element, detection of the magnetostrictive acoustic vibrations produced and evaluation of the signal obtained.

2. A method according to Claim 1, characterised in that a changeable magnetic constant field is superposed on the magnetic alternating field.

3. A method according to Claim 1 or 2, characterised in that the magnetic constant field is controlled quasi-statically such that its changeable intensity is changed cyclically between two field intensity values, starting from an initial value.

4. A method according to one of the preceding Claims, characterised in that the frequency of the magnetic alternating field is changed and a magneto-mechanical acoustic vibrational spectrum is recorded as a function of the frequency.

5. A method according to one of the preceding Claims, characterised in that the vibrational spectrum obtained when testing the connecting element is compared with the vibrational spectrum associated with a stress-strain curve, in order to obtain a measured result for the state of stress.

6. A method according to one of the preceding Claims, characterised in that reference values are determined with a standardised connecting element and are used to provide reference quantities in the stress-strain curve, with the vibrational spectrum produced when testing a connecting element being related to these reference quantities in order to obtain a measured result for the state of stress.

7. A method according to one of the preceding Claims, characterised in that a numerical value is determined, which is in a functional connection with the area under the detected vibrational spectrum and with which a point on the stress-strain curve is associated.

8. A method according to one of the preceding Claims, characterised in that a numerical value is determined which is in a functional connection with the area of the magnetostrictive hysteresis loop and with which a point on the stress-strain curve is associated.

9. A method according to one of the preceding Claims, characterised in that an output signal obtained after the evaluation is fed to a display device to display the measured value, or is used to control a screwing device.

10. A method according to one of the preceding Claims, characterised in that the frequency shift of individual lines of a spectrum is measured with respect to a reference spectrum and is obtained as a measurement of the expansion of the connecting element.

11. A method according to one of the preceding Claims, characterised in that the change in amplitude of individual lines of the spectrum is measured with respect to a reference spectrum and is obtained as a measurement for the stress in the connecting element.

12. A method according to one of the preceding Claims, characterised in that the stress-strain curve is recorded by combining the measurements of the frequency shift and the change in amplitude.

13. An apparatus for the non-destructive determination of the state of stress of ferromagnetic installed connecting elements, with an alternating-current generator (21) of changeable frequency, a coil (19) connected to the alternating-current generator (21) for producing a magnetic field in at least one part of the connecting element (13), an acoustic-electric pick-up (23) which can be applied to the connecting element (13) and a signal processing and control means (25).

14. An apparatus according to Claim 13, characterised by a direct-current generator (22) which is connected to the coil (19) to produce a magnetic constant field.

15. An apparatus according to one of Claims 13 or 14, characterised by a constant field coil (20) for generating a magnetic field in at least part of the connecting element (13), the constant field coil (20) being connected to a direct-current generator (22).

16. An apparatus according to one of Claims 13 to 15, characterised in that a display device (27) for displaying the state of stress in the connecting element (13) is connected to the evaluation circuit (25).

17. An apparatus according to one of Claims 13 to 16, characterised in that a screwing device (28) is connected to the evaluation circuit (25).

18. An apparatus according to one of Claims 13 to 17, characterised in that the coil (19 or 20) and the pick-up (23) are arranged practically concentrically to one another.

19. An apparatus according to one of Claims 13 to 18, characterised in that the pick-up (23) is located on a coupling piece (26).

20. An apparatus according to Claim 19, characterised in that the coil (19 or 20) is located within the coupling piece (26).

21. An apparatus according to one of Claims 13 to 20, characterised in that it is designed as a rod-shaped manually-operated instrument which has a head (33) in which the coils (19 or 20) and the pick-up (23) are located.

22. An apparatus according to Claim 21, characterised in that the pick-up (23) is axially displaceable in the head (33) counter the force of a spring (37).

23. An apparatus according to one of Claims 13 to 22, characterised in that the alternating field coil (19) and the constant field coil (20) are arranged substantially concentrically to one another.

24. An apparatus according to one of Claims 13 to 23, characterised in that the constant field coil (20) is arranged substantially at right-angles to the alternating field coil (19).

25. An apparatus according to one of Claims 13 to 24, characterised in that the constant field coil (20) is located on a coupling piece (26), said piece firstly effecting the transmission of the measuring signals from the point of excitation to the pick-up (23) and secondly effecting the introduction of the constant field flux into the connecting element (13) to be tested.

26. An apparatus according to one of Claims 13 to 25, characterised in that the coils (19 or 20) are integrated in a forging manipulator.

## Revendications

1. Procédé de détermination non destructive de l'état de contrainte d'éléments d'assemblage ferromagnétiques à l'état monté par application d'un champ magnétique alternatif à l'élément d'assemblage, détermination des vibrations acoustiques de magnétostriction ainsi provoquées et évaluation du signal obtenu.

2. Procédé selon la revendication 1, caractérisé en ce qu'un champ continu magnétique variable est superposé au champ magnétique alternatif.

3. Procédé selon la revendication 1 ou 2, caractérisé en ce que le champ magnétique continu est commandé de manière quasi statique de façon que son intensité variable soit modifiée cycliquement entre deux valeurs d'intensité de champ, en partant d'une valeur initiale.

4. Procédé selon l'une des revendications précédentes, caractérisé en ce que la fréquence du champ magnétique alternatif est modifiée et que, en fonction de la fréquence, un spectre de vibrations acoustiques est enregistré de manière magnéto-mécanique.

5. Procédé selon l'une des revendications précédentes, caractérisé en ce que, au cours du contrôle de l'élément d'assemblage, le spectre de vibrations obtenu est comparé au spectre de vibrations correspondant à une courbe contrainte-allongement afin d'obtenir un résultat de mesure pour l'état de contrainte.

6. Procédé selon l'une des revendications précédentes, caractérisé en ce que des valeurs de référence sont déterminées au moyen d'un élément d'assemblage standardisé et sont utilisées pour créer des grandeurs de référence dans la courbe contrainte-allongement, tandis que le spectre de vibrations créé au cours du contrôle de l'élément d'assemblage est mis en relation avec ces grandeurs de référence afin d'obtenir un résultat de mesure pour l'état de contrainte.

7. Procédé selon l'une des revendications précédentes, caractérisé en ce que l'on détermine une valeur qui est en relation fonctionnelle avec la surface située en dessous du spectre de vibrations et qui est mise en correspondance avec un point sur la courbe contrainte-allongement.

8. Procédé selon l'une des revendications précédentes, caractérisé en ce que l'on détermine une valeur qui est en relation fonctionnelle avec la surface de la boucle d'hystérésis de magnétostriction et qui est mise en correspondance avec un point sur la courbe contrainte-allongement.

9. Procédé selon l'une des revendications précédentes, caractérisé en ce qu'un signal de sortie obtenu après l'évaluation est amené à l'affichage de la valeur de mesure d'un dispositif d'affichage ou est utilisé pour la commande d'un dispositif de vissage.

10. Procédé selon l'une des revendications précédentes, caractérisé en ce que la variation de fréquence des différentes raies d'un spectre est mesurée par rapport à un spectre de référence et est utilisée comme mesure pour l'allongement de l'élément d'assemblage

11. Procédé selon l'une des revendications précédentes, caractérisé en ce que la variation d'amplitude des différentes raies du spectre est mesurée par rapport à un spectre de référence et est utilisée comme mesure pour la contrainte dans l'élément d'assemblage.

12. Procédé selon l'une des revendications précédentes, caractérisé en ce que la courbe contrainte-allongement est enregistrée par combinaison des mesures de déplacement de fréquence et de variation d'amplitude.

13. Dispositif pour la détermination non destructive de l'état de contrainte d'éléments d'assemblage ferromagnétiques à l'état monté avec un générateur de courant alternatif (21) de fréquence variable, une bobine (19) raccordée au générateur de courant alternatif (21) pour créer un champ magnétique dans au moins une partie de l'élément d'assemblage (13), un capteur (23) acoustique électrique pouvant être monté sur l'élément d'assemblage (13) et un dispositif de traitement des signaux et de commande (25).

14. Dispositif selon la revendication 13, caractérisé par un générateur de courant (22) qui est connecté à la bobine (19) pour créer un champ magnétique continu.

15. Dispositif selon l'une des revendications 13 ou 14, caractérisé par une bobine de champ continu (20) pour créer un champ magnétique dans au moins une partie de l'élément d'assemblage (13) tandis que la bobine de courant continu (20) est connectée à un générateur de courant continu (22).

16. Dispositif selon l'une des revendications 13 à 15, caractérisé en ce qu'un dispositif d'affichage (27) destiné à afficher l'état de contrainte dans l'élément d'assemblage (13) est raccordé au circuit d'évaluation (25).

17. Dispositif selon l'une des revendications 13 à 16, caractérisé en ce qu'un dispositif de vissage (28) est raccordé au circuit d'évaluation (25).

18. Dispositif selon l'une des revendications 13 à 17, caractérisé en ce que la bobine (19 ou 20) et le capteur (23) sont disposés pratiquement de manière concentrique l'un par rapport à l'autre.

19. Dispositif selon l'une des revendications 13 à 18, caractérisé en ce que le capteur (23) est monté sur une pièce d'accouplement (26).

20. Dispositif selon la revendication 19, caractérisé en ce que la bobine (19 ou 20) est disposée à l'intérieur de la pièce d'accouplement (26).

21. Dispositif selon l'une des revendications 13 à 20, caractérisé en ce qu'il se présente sous forme d'un appareil à main en forme de barreau comportant une tête (33) dans laquelle sont disposées les bobines (19 ou 20) et le capteur (23).

22. Dispositif selon la revendication 21, caractérisé en ce que le capteur (23) peut coulisser axialement dans la tête (33) à l'encontre de la force d'un ressort (37).

23. Dispositif selon l'une des revendications 13 à 22, caractérisé en ce que la bobine de champ alternatif (19) et la bobine de champ continu (20) sont disposées de manière essentiellement concentrique l'une par rapport à l'autre.

24. Dispositif selon l'une des revendications 13 à 23, caractérisé en ce que la bobine de champ continu (20) est disposée essentiellement perpendiculaire à la bobine de champ alternatif (19).

25. Dispositif selon l'une des revendications 13 à 24, caractérisé en ce que la bobine de champ continu est montée sur une pièce d'accouplement (26), cette pièce servant, d'une part, à transmettre les signaux de mesure depuis le lieu d'excitation jusqu'au capteur (23) et, d'autre part, à faire pénétrer le flux du champ continu dans l'élément d'assemblage (13) à contrôler.

26. Dispositif selon l'une des revendications 13 à 25, caractérisé en ce que les bobines (19 et 20) sont intégrées dans un appareil de manipulation automatique.
